Europäisches Patentamt

**European Patent Office**

Office européen des brevets

(11) Veröffentlichungsnummer: **0 268 163**
**B1**

(12) EUROPÄISCHE PATENTSCHRIFT

(45) Veröffentlichungstag der Patentschrift:
24.10.90

(21) Anmeldenummer: 87116395.2

(22) Anmeldetag: 06.11.87

(51) Int. Cl.⁵: **A01B 49/06**

(54) Bestellsaatverfahren und Gerätekombination zur Durchführung eines Bestellsaatverfahrens.

(30) Priorität: 12.11.86 DE 3638603

(43) Veröffentlichungstag der Anmeldung:
25.05.88 Patentblatt 88/21

(45) Bekanntmachung des Hinweises auf die Patenterteilung:
24.10.90 Patentblatt 90/43

(84) Benannte Vertragsstaaten:
BE CH DE FR GB IT LI NL

(56) Entgegenhaltungen:
EP-A- 0 075 133
DE-U- 8 222 674
FR-A- 2 032 019
FR-A- 2 124 063
FR-A- 2 302 010
GB-A- 1 094 681
US-A- 4 432 292

(73) Patentinhaber: Schlüter-Craes, Franz, Dr., Am Brink 9,
D-4783 Anröchte-Berge(DE)

(72) Erfinder: Schlüter-Craes, Franz, Dr., Am Brink 9,
D-4783 Anröchte-Berge(DE)

(74) Vertreter: Habbel, Hans-Georg, Dipl.-Ing.,
Postfach 3429 Am Kanonengraben 11,
D-4400 Münster(DE)

ACTORUM AG

## Beschreibung

Die Erfindung bezieht sich auf ein Bestellsaatverfahren gemäß dem Oberbegriff des Patentanspruches 1 und auf eine Gerätekombination gemäß dem Oberbegriff des Patentanspruches 3.

Aus der GB-PS 10 94 681 ist ein Verfahren bekannt, bei welchem die obere Krumenschicht mittels einer rotierenden Fräse abgehoben und als Bodenwurf in Fahrtrichtung gesehen nach hinten abgegeben wird, wobei Saatgut durch Saatgutführungsrohre durch die Bodenbahnen hindurch auf den von der Fräse erzeugten Bodenhorizont breit abgelegt und von den Bodenbahnen bedeckt wird. Die bei dieser bekannten Verfahrensweise erforderlichen Tiefenrollen, die vor der Fräse angeordnet sind, haben keine bodenverfestigenden Wirkungen über die gesamte Breite der Maschine gesehen, da ausdrücklich nur von einer Rolle gesprochen wird, die als Tiefenkontrolle und nicht als Bodenverfestiger dienen soll. Durch die Anordnung des die Bodenbahnen führenden Bodenbleches bei der bekannten Arbeitsweise tritt eine geführte Ablagerung des zurückgeworfenen Bodens auf, d.h. eine Trennung der Bodenkrumen, je nach ihrer Schwere, erfolgt bei diesem bekannten Verfahren nicht. Bei der bekannten Arbeitsweise wird eine Dreipunktaufhängung benutzt, in der die Maschine eingehängt wird, so daß bei dieser bekannten Anordnung die gesamte Maschine von der Arbeitsmaschine getragen wird und nicht nur gezogen wird, so daß dadurch die Steuerung der Arbeitstiefe nicht durch die eigentliche Gerätekombination erfolgt, sondern durch die Zugmaschine selbst.

Demgegenüber liegt der Erfindung die Aufgabe zugrunde, ein kostengünstiges Bestellsaatverfahren zu schaffen, das eine krumentiefe Bodenbestellung und einwandfreie Aussaat in einem Arbeitsgang gewährleistet.

Diese der Erfindung zugrundeliegende Aufgabe wird durch die Lehre des Hauptanspruches gelöst.

Eine vorteilhafte Ausführungsformen ist in dem Unteranspruch 2 erläutert.

Die Erfindung betrifft auch eine Gerätekombination und geht dabei im Oberbegriff des Patentanspruches 3 von einer Vorrichtung aus, wie sie in der DE-31 36 706 A 1 entsprechend EP-A 75 139 beschrieben wird. In dieser Literaturstelle wird eine Getreidesaatvorrichtung beschrieben, bei welcher in einem Geräterahmen eine rotierend arbeitende Bodenbearbeitungsmaschine vorgesehen ist, der nachfolgend eine Packerwalze zugeordnet ist. Im Unterschied hierzu wird gemäß dem Patentanspruch 4 vorgeschlagen, daß in dem Geräterahmen die Packerwalze vor der Bodenbearbeitungsmaschine angeordnet ist, der Geräterahmen über mindestens einen Zugarm an die Zugmaschine anschließt und an den Geräterahmen eine nach hinten angeordnete Stützanordnung anschließt, die zusammen mit der Packerwalze die Bodenbearbeitungsmaschine hinsichtlich der Arbeitstiefe steuert.

Im Unterschied zu der bekannten Einrichtung, ist bei der erfindungsgemäßen Einrichtung die Bodenbearbeitungsmaschine in dem Geräterahmen hinter der Packerwalze angeordnet und nicht wie bei der bekannten Einrichtung, bei der die Packerwalze anschließend an die Säschare vorgesehen wird. Auch wird bei der erfindungsgemäßen Einrichtung der Geräterahmen über Lenker von der Zugmaschine gezogen, während bei der bekannten Einrichtung die in dem Geräterahmen zusammengefaßten Arbeitsgeräte von der Zugmaschine getragen werden.

Durch diese unterschiedliche Gestaltung wird erreicht, daß die vorzugsweise flexible spiralige Packerwalze, die der Fräse vorlaufend zugeordnet ist, und zwar in Verbindung mit den der Fräse nachlaufend zugeordneten Stützrädern, eine optimale Einhaltung der Arbeitstiefe, unabhängig vom Bodenzustand, gewährleistet. Weiterhin wird durch die Anhängung anstelle der Aufhängung der Bodenbearbeitungsgeräte erreicht, daß die Hubkräfte nicht überfordert werden und eine unzulässige Vorderachsentlastung der Zugmaschine nicht eintritt. Auch wird bei der erfindungsgemäßen Gerätekombination erreicht, daß eine Erhöhung der Arbeitsgeschwindigkeit der Fräse möglich ist, ohne daß die sonst üblichen Wellenbildungen im Boden auftreten.

Die in ihrer Arbeitstiefe durch die flexible Packerwalze auf Saattiefe begrenzte Bodenfräse erzeugt ohne die hintere Bodenklappe einen bogenförmigen Erdauswurf, unter dem über die Gänsefußschare das Saatgut breit verteilt wird. Dadurch, daß die Boden bahnen ohne eine Bodenklappe nach hinten geführt werden, erfolgt ein schichtweises Ablegen des Bodens in Abhängigkeit des Gewichtes der Bodenbestandteile, nämlich größere oder kleinere Bodenklumpen und der sich in oder auf dem Boden befindlichen Pflanzenreste, so daß sich als oberste Abdeckschicht diese Pflanzenreste auf die Bodenbahnen auflegen.

Schließlich wird durch die erfindungsgemäße Gesamtkombination erreicht, daß die Gerätekombination hobelartig angeordnet ist und damit Bodenunebenheiten ausgleicht.

Ein Ausführungsbeispiel der Erfindung wird nachfolgend anhand der Zeichnungen erläutert. Die Zeichnungen zeigen dabei in

Fig. 1 schematisch eine Draufsicht auf die erfindungsgemäße Gerätekombination zur Durchführung des erfindungsgemäßen Bestellsaatverfahrens, in

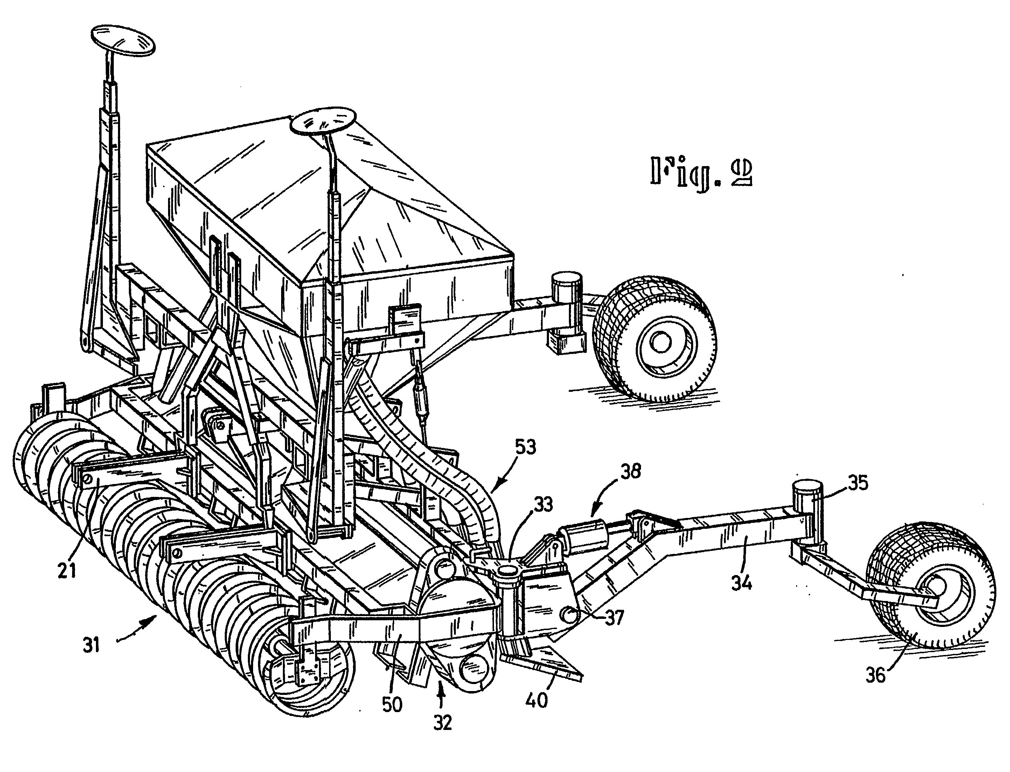

Fig. 2 schaubildlich eine Seitenansicht auf einen Teil der erfindungsgemäßen Gerätekombination und in

Fig. 3 in größerem Maßstab einen Längsschnitt durch eine einzelne Sävorrichtung.

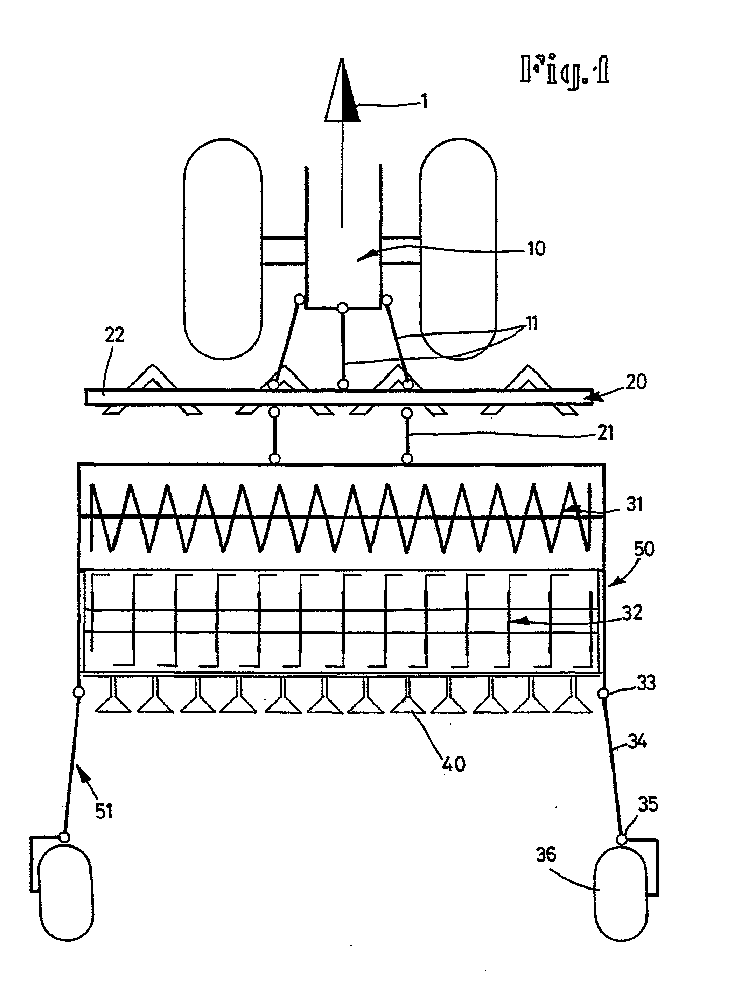

In Fig. 1 ist mit 1 die Fahrt- und Arbeitsrichtung für die erfindungsgemäße Gerätekombination bezeichnet. An eine Zugmaschine 10 schließt über eine Dreipunktaufhängung 11 ein Lockerungswerkzeug 20 an, das bei dem dargestellten Ausführungsbeispiel als Flügelschargrubber ausgebildet ist. Die einzelnen Arbeitswerkzeuge werden dabei an einer entsprechenden Arbeitsschiene 22 gehalten.

An diese Arbeitsschiene 22 schließen Zugarme 21 an, die seitlich und nach unten hin fixiert sein können. Die Lockerungswerkzeuge 20 haben die Aufgabe, in Abhängigkeit vom Bodenzustand Reifenspuren oder Verdichtungen aufzuheben bzw. ein für das Pflanzenwachstum geeignetes Bodengefüge zu erstellen. Hieraus ist ersichtlich, daß nicht in allen Arbeitsverfahren es erforderlich ist, daß ein solches Lockerungswerkzeug 20 vorgesehen wird.

Von den Zugarmen 21 wird ein Geräterahmen 50 getragen, in dem eine Packerwalze 31, ein Bodenbearbeitungsgerät 32 und Säschare 40 angeordnet sind. Die Packerwalze 31 ist vorzugsweise als flexible spiralige Packerwalze ausgebildet und das Bodenbearbeitungsgerät 32 ist bei dem dargestellten Ausführungsbeispiel als Fräse dargestellt.

Der für die Pflanzenentwicklung erforderliche Bodenschluß wird durch die Packerwalze 31 hergestellt, die, wenn sie als flexible Spirale gestaltet ist, weitgehend unempfindlich gegenüber größeren Steinen, feuchtem Boden oder Pflanzenresten ist. Die rückverfestigende Wirkung der Packerwalze 31 wird dadurch verstärkt, daß sie Stützwalze für die nachfolgende Fräse, d.h. für das nachfolgende Bodenbearbeitungsgerät 32 ist.

Für die exakte Tiefenführung und optimale Bodenanpassung des Bodenbearbeitungsgerätes 32 ist bei der erfindungsgemäßen Gerätekombination zusätzlich zur vorausgehenden, die gesamte Arbeitsbreite abdeckenden Packerwalze 31 eine weitere hintere Stützanordnung 51 vorgesehen, die bei dem dargestellten Ausführungsbeispiel aus zwei Stützrädern 36 besteht, die jeweils um eine vertikale Achse 35 frei drehbar sind. Diese Stützräder 36 schließen je über einen Stützarm 34 und unter Zwischenschaltung vertikaler Achsen 33 an den Geräterahmen 50 an. Die Stützräder 36 laufen hinter und vorzugsweise seitlich der von dem Bodenbearbeitungsgerät 32 erzeugten Bodenbahnen. Bei möglichst naher Anordnung der Packerwalze 31 zum Bodenbearbeitungsgerät 32 ist der Abstand der Stützräder 36 so gewählt, daß sie nicht mehr als etwa 1/3 des abzustützenden Gewichtes tragen. Die Stützarme 34 sind, wie voraufstehend erläutert, horizontal verschwenkbar angeordnet, so daß die Stützräder 36 sowohl seitlich als auch hinter dem Bodenbearbeitungsgerät eingerichtet werden können.

Zusätzlich zu den eine Verschwenkung der Stützräder 36 ermöglichenden vertikalen Achsen 35 und 33 ist jeder Stützarm 34 über eine horizontale Achse 37 (Fig. 4) beweglich. Die Verstellung der Arme 34 um diese horizontale Achse 37 erfolgt vorzugsweise durch entsprechende Kolbenzylinderanordnungen 38.

Die Anordnung der z. B. durch Spindeln höhenverstellbaren Packerwalze 31 und des Bodenbearbeitungsgerätes 32 und der Stützräder 36 und der Sachverhalt, daß das so tiefengeführte Bodenbearbeitungsgerät in Arbeitsstellung nur durch seitlich fixierte Unterlenker gezogen wird, gewährleisten eine optimale Einhaltung der Arbeitstiefe unabhängig von Bodenzustand. Weitere Vorteile der gewählten Anhängung des Bodenbearbeitungsgerätes sind darin zu sehen, daß die Hubkräfte nicht überfordert werden und eine unzulässige Vorderachsentlastung der Zugmaschine nicht eintritt. Auch ist eine Erhöhung der Arbeits geschwindigkeit möglich, ohne daß die sonst übliche Wellenbildung im Boden eintritt.

Das in seiner Arbeitstiefe auf Saattiefe begrenzte Bodenbearbeitungsgerät 32 erzeugt ohne eine hintere Bodenklappe einen bogenförmigen Erdauswurf und erfindungsgemäß wird das Saatgut durch diese Bodenwurfbahnen hindurchgeleitet und dann unter ihnen mittels gänsefußartiger Säschare 40 breit verteilt.

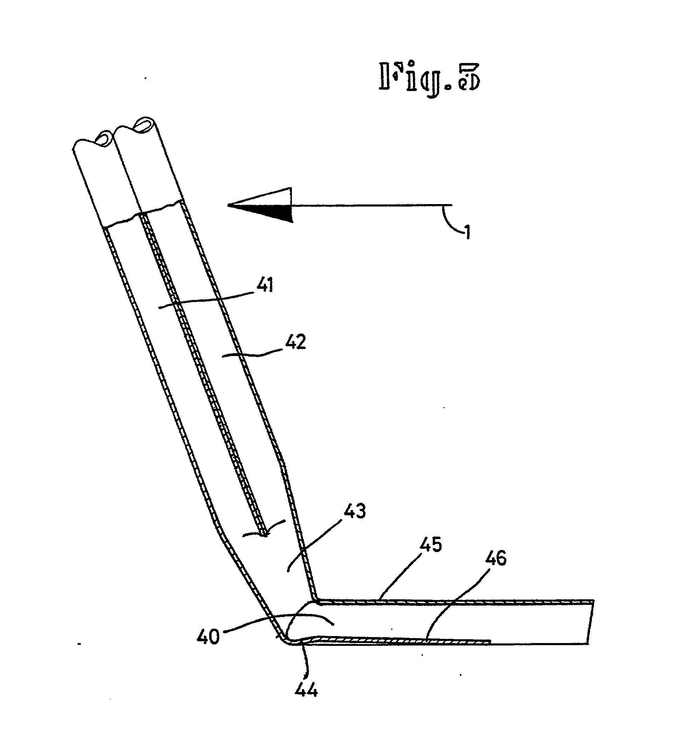

Vorzugsweise wird anstelle einer Säschiene eine Reihe einzeln aufgehängter, untereinander baugleicher Breitsäschare 40 verwendet, die mittels im wesentlichen vertikal durch die Bodenwurfbahnen hindurchführender Saatgutzuführungsrohre 41, 42 beschickt werden (Fig. 3). Bei einem mittleren Scharabstand von etwa 25 cm und der mit etwa 20° gegen die vertikale, nach hinten abfallenden Stellung der Saatgutzuführungsrohre 41, 42 bleibt ein für die verstopfungsfreie Funktion der Sävorrichtung erforderlicher großer Durchlaß erhalten. Dabei ist die Schrägstellung der Saatgutzuführungsrohre Voraussetzung dafür, daß die Anwuchsreste oder ähnliches sich nicht wesentlich festsetzen können.

Das in Fig. 3 im Längsschnitt dargestellte Saatgutzuführungsrohr zeigt ein vorderes und ein hinteres Saatgutzuführungsrohr 41 bzw. 42, die in einem Übergangsbereich 43 gleichförmig zusammengeführt, in einem Winkel von ca. 110° in das gänsefußartig ausgebildete Säschar 40 übergehen. Dieses Säschar 40 besteht aus einem oberen Abschirmblech 45 und einer unteren kürzeren Bodenplatte 46, die mit einer etwas abgewinkelten Aufprallfläche 44 versehen ist.

Durch Verwendung möglichst kurzer voneinander unabhängiger Saatgutzuführungsrohre zu einem Säschar 40 wird die Bildung von Kornhäufungen begrenzt. Die Zusammenführung der voneinander unabhängigen Körnerfolgen im Übergangsbereich 43 ergibt eine neue Körnerfolge, die gleichmäßiger ist als die der einzelnen Saatgutzuführungsrohre. Die gegenüber der Verwendung von nur einem Saatgutzuführungsrohr wesentlich gleichmäßigere Körnerfolge in Fahrtrichtung bei der erfindungsgemäßen Anordnung kennzeichnet die mit der erfindungsgemäßen Sävorrichtung erzielbare Breitverteilung des Saatgutes.

Nach dem Übergangsteil 43 gelangen die Körner auf die Prallfläche 44, deren empirisch ermittelte Neigung zusammen mit der Luftströmung die gleichmäßige Breitverteilung der Körner quer zur Fahrtrichtung bestimmt. Dabei gewährleistet das seitlich bis unter die Prallfläche 44 heruntergezogene Abschirmblech 45, daß von den Saatgutzuführungsrohren 41, 42 herabfallendes Material die Kornverteilung nicht stört. Das Abschirmblech 45 und die Bodenplatte 46 führen die Körner gleichmäßig aus dem Boden.

**Patentansprüche**

1. Bestellsaatverfahren, bei dem die obere Krumenschicht mittels einer rotierenden, mit bodenabhebenden Werkzeugen versehenen Fräse abgehoben und als Bodenwurf in Fahrtrichtung gesehen nach hinten abgegeben wird und Saatgut durch Saatgutführungsrohre durch die Bodenbahnen hindurch auf den von der Fräse erzeugten Bodenhorizont breit abgelegt und von den Bodenbahnen bedeckt wird, dadurch gekennzeichnet, daß der Boden vor der Fräse durch eine Packerwalze verfestigt wird, die von der Fräse erzeugten Bodenbahnen frei, d.h. ohne Bodenklappe, nach hinten geführt werden, die Saatgutführungsrohre in gänsefußartige Breitsäschare münden und die Arbeitstiefe der Fräse und der Säschare durch die vorlaufende Packerwalze und eine nachlaufende Stützanordnung bestimmt wird, wobei diese Geräteeinheit von einer Zugmaschine gezogen wird.

2. Bestellsaatverfahren nach Anspruch 1, dadurch gekennzeichnet, daß vor der Packerwalze eine krumentiefe Bodenlockerung durchgeführt wird.

3. Gerätekombination mit einer Zugmaschine, einer rotierend arbeitenden Bodenbearbeitungsmaschine, einer Packerwalze und einem die Bodenbearbeitungsmaschine und die Packerwalze tragenden Geräterahmen, dadurch gekennzeichnet, daß in dem Geräterahmen (50) die Packerwalze (31) vor der Bodenbearbeitungsmaschine (32) angeordnet ist, der Geräterahmen (50) über mindestens einem Zugarm (21) an die Zugmaschine (10) anschließt und an den Geräterahmen (50) eine nach hinten angeordnete Stützanordnung (51) anschließt, die zusammen mit der Packerwalze (31) die Bodenbearbeitungsmaschine (32) hinsichtlich der Arbeitstiefe steuert.

4. Gerätekombination nach Anspruch 3, dadurch gekennzeichnet, daß die Packerwalze (31) unmittelbar vor der Bodenbearbeitungsmaschine (32) angeordnet ist.

5. Gerätekombination nach einem der Anspruche 3 oder 4, dadurch gekennzeichnet, daß die Packerwalze (31) und die Stützanordnung (51) höhenverstellbar am Geräterahmen (50) angeordnet sind.

6. Gerätekombination nach einem der Ansprüche 3 bis 5, dadurch gekennzeichnet, daß die hintere Stützanordnung (51) durch zwei hinter dem Geräterahmen (50) angeordneten Stützrädern (36) gebildet ist.

7. Gerätekombination nach Anspruch 6, dadurch gekennzeichnet, daß jedes Stützrad (36) am hinteren Ende eines hinter dem Geräterahmen (50) anschließenden Stützarmes (34) angeordnet ist.

8. Gerätekombination nach Anspruch 7, dadurch gekennzeichnet, daß jedes Stützrad (36) um eine am Ende seines Stützarmes (34) befindliche etwa vertikale Achse (35) frei drehbar ist.

9. Gerätekombination nach Anspruch 7 oder 8, dadurch gekennzeichnet, daß jeder Stützarm (34) um eine etwa vertikale Achse (33) an den Geräterahmen anschließt.

10. Gerätekombination nach einem der Ansprüche 3 bis 9, dadurch gekennzeichnet, daß der Abstand der hinteren Stützanordnung (51) zur Bodenbearbeitungsmaschine (32) so gewählt ist, daß sie nicht mehr als ca. 1/3 des abzustützenden Gewichtes trägt.

11. Gerätekombination nach einem der Ansprüche bis 10, dadurch gekennzeichnet, daß der Geräterahmen (50) für die Transportstellung von der Zugmaschine (10) angehoben und in dieser Stellung von der Zugmaschine (10) und der hinteren Stützanordnung (51) getragen ist.

12. Gerätekombination nach einem der Ansprüche 3 bis 11, dadurch gekennzeichnet, daß die Packerwalze (31) als flexible spiralige Packerwalze ausgebildet ist.

13. Gerätekombination nach einem der Ansprüche 3 bis 12, dadurch gekennzeichnet, daß die Bodenbearbeitungsmaschine (32) in an sich bekannter Weise durch eine Fräse gebildet ist.

14. Gerätekombination nach Anspruch 13, dadurch gekennzeichnet, daß sie Saatgutzuführungseinrichtungen (53) aufweist, die je mit einer Breitsäschar (40) und Saatgutzuführungsrohren (41, 42) versehen sind, wobei die Packerwalze (31) und die Stützanordnung (51) die Saatgutzuführungseinrichtungen (51) hinsichtlich der Arbeitstiefe steuern.

15. Gerätekombination nach einem oder mehreren der Ansprüche 3 bis 14, dadurch gekennzeichnet, daß die Fräse (32) keine die Bodenbahnen führenden Bodenklappen aufweist.

16. Gerätekombination nach einem der Ansprüche 3 bis 15, dadurch gekennzeichnet, daß die Stützräder (36) etwa seitlich der von der Fräse (32) erzeugten Bodenbahnen angeordnet sind.

17. Gerätekombination nach einem der Ansprüche 14 bis 16, dadurch gekennzeichnet, daß mehrere Saatgutzuführungsrohre (41, 42) in einem Breitsäschar (40) zusammengefaßt sind und auf eine gemeinsame Aufprallfläche (46) im Schar (40) münden.

18. Gerätekombination nach Anspruch 17, dadurch gekennzeichnet, daß die Saatgutzuführungsrohre (41, 42) in Fahrtrichtung gesehen hintereinander liegen.

19. Gerätekombination nach einem der Ansprüche 14 bis 18, dadurch gekennzeichnet, daß die in ein Breitsäschar (40) mündenden Saatgutzuführungsrohre (41, 42) an einem Rahmen oberhalb der Bodenbahnen befestigt sind und von der Grundstellung aus nach hinten und/oder quer zur Fahrtrichtung federnd ausweichen können.

20. Gerätekombination nach einem der Ansprüche 14 bis 19, dadurch gekennzeichnet, daß die Saatgutzuführungsrohre (41, 42) in Grundstellung in einem Winkel von 10 bis 30 Grad, vorzugsweise von 20 Grad, gegen die Vertikale nach hinten abstehen.

21. Gerätekombination nach einem der Ansprüche 14 bis 20, dadurch gekennzeichnet, daß die Breitsäschare (40) in Fahrtrichtung gesehen nach hinten abfallend um ca. 10 Grad gegen die Horizontale geneigt angeordnet sind.

22. Gerätekombination nach einem der Ansprüche 14 bis 19, dadurch gekennzeichnet, daß die Saatgutzuführungsrohre (41, 42) in Fahrtrichtung gesehen seitlich abgeflacht sind.

23. Gerätekombination nach einem der Ansprüche 3 bis 22, dadurch gekennzeichnet, daß den von dem Geräterahmen (50) getragenen Arbeitsgeräten ein von der Dreipunktaufhängung (11) der Zugmaschine (10) getragenes Lockerungswerkzeug (20) vorgeschaltet ist.

24. Gerätekombination nach Anspruch 23, dadurch gekennzeichnet, daß das Lockerungswerkzeug (20) als einbalkiger Flügelschargrubber ausgebildet ist.

25. Gerätekombination nach Anspruch 23 oder 24, dadurch gekennzeichnet, daß der Geräterahmen (50) an das Lockerungswerkzeug (20) anschließt.

26. Gerätekombination nach einem oder mehreren der Ansprüche 3 bis 25 dadurch gekennzeichnet, daß der Geräterahmen (50) über zwei an ihm befestigte Zugarme (21) an den Unterlenkern der Dreipunktaufhängung (11) der Zugmaschine (10) oder an das Lockerungswerkzeug (20) anschließt, so daß der Geräterahmen (50) gegenüber der Zugmaschine (10) oder dem Lockerungswerkzeug (20) um eine etwa horizontale quer zur Fahrtrichtung (1) liegende Achse pendeln kann.

**Revendications**

1. Procédé de semis dans lequel la couche supérieure croûteuse est enlevée à l'aide d'une fraise tournante munie d'outils d'enlèvement de la terre et rejetée en un jet sur le sol, en arrière, considéré dans le sens de la marche, et où les semences sont diffusées sur une grande largeur, à travers des tubes de guidage des semences, dans l'épaisseur des nappes de terre, sur le niveau de terre produit par la fraise et recouverte par les nappes de terre, caractérisé en ce que le sol est compacté par un rouleau compacteur en avant de la fraise, les nappes de terre produites par la fraise sont rejetées librement vers l'arrière, c'est-à-dire sans lame niveleuse, les tubes de guidage des semences débouchent dans les socs diffuseurs en patte d'oie, et la profondeur de travail de la fraise et des socs diffuseurs est déterminée par le rouleau compacteur placé en avant et par un dispositif d'appui placé en arrière, cette unité d'appareils étant tirée par un tracteur.

2. Procédé de semis selon la revendication 1, caractérisé en ce qu'un ameublissement du sol est exécuté sur la profondeur de terre croûtée en avant du rouleau compacteur.

3. Combinaison d'appareils comprenant un tracteur, un cultivateur qui travaille par rotation, un rouleau compacteur et un châssis des appareils qui porte le cultivateur et le rouleau compacteur, caractérisée en ce que, dans le châssis (50) des appareils, le rouleau compacteur (31) est disposé en avant du cultivateur (32), le châssis (50) des appareils est relié au tracteur (10) par au moins un bras de traction (21), et en ce qu'au châssis (50) des appareils, fait suite un dispositif d'appui (51) disposé en arrière, et qui commande la profondeur de travail du cultivateur (32) en combinaison avec le rouleau compacteur (31).

4. Combinaison d'appareils selon la revendication 3, caractérisée en ce que le rouleau compacteur (31) est disposé immédiatement en avant du cultivateur (32).

5. Combinaison d'appareils selon une des revendications 3 et 4, caractérisée en ce que le rouleau compacteur (31) et le dispositif d'appui (51) sont agencés réglables en hauteur sur le châssis (50) des appareils.

6. Combinaison d'appareils selon une des revendications 3 à 5, caractérisée en ce que le dispositif d'appui arrière (51) est formé de deux roues d'appui (36) disposées en arrière du châssis (50) des appareils.

7. Combinaison d'appareils selon la revendication 6, caractérisée en ce que chaque roue d'appui (36) est montée à l'extrémité arrière d'un bras d'appui (34) qui fait suite en arrière du châssis (50) des appareils.

8. Combinaison d'appareils selon la revendication 7, caractérisée en ce que chaque roue d'appui (36) est montée librement rotative autour d'un axe (35) à peu près vertical situé à l'extrémité de son bras d'appui (34).

9. Combinaison d'appareils selon l'une des revendications 7 et 8, caractérisée en ce que chaque bras d'appui (34) s'articule au châssis des appareils de façon à pouvoir tourner autour d'un axe (33) à peu près vertical.

10. Combinaison d'appareils selon une des revendications 3 à 9, caractérisée en ce que la distance entre le dispositif d'appui arrière (51) et le cultivateur (32) est choisie de manière que ce dispositif ne porte pas plus d'environ 1/3 du poids à porter.

11. Combinaison d'appareils selon une des revendications 3 à 10, caractérisée en ce que, pour la position de transport, le châssis (50) des appareils est soulevé par le tracteur et que, dans cette position, il est porté par le tracteur (10) et par le dispositif d'appui arrière (51).

12. Combinaison d'appareils selon une des revendications 3 à 11, caractérisée en ce que le rouleau compacteur (31) est constitué par un rouleau compacteur hélicoïdal flexible.

13. Combinaison d'appareils selon une des revendications 3 à 12, caractérisée en ce que le cultivateur (32) est constitué d'une facon connue par une fraise.

14. Combinaison d'appareils selon la revendication 13, caractérisée en ce qu'elle présente des dispositifs d'amenée des semences (53) qui sont munis chacun d'un soc diffuseur (40) et de tubes d'amenée des semences (41, 42), le rouleau compacteur (31) et le dispositif d'appui (51) commandant la profondeur de travail des dispositifs d'amenée des semences.

15. Combinaison d'appareils selon une ou plusieurs des revendications 3 à 14, caractérisée en ce que la fraise (32) ne comporte pas de lames niveleuses pour guider les nappes de terre.

16. Combinaison d'appareils selon une des revendications 3 à 15, caractérisée en ce que les roues d'appui (36) sont disposées à peu près latéralement aux nappes de terre produites par la fraise (32).

17. Combinaison d'appareils selon une des revendications 14 à 16, caractérisée en ce que plusieurs tubes d'amenée des semences (41, 42) sont regroupés dans un soc diffuseur (40) et débouchent sur une chicane commune (46) à l'intérieur du soc.

18. Combinaison d'appareils selon la revendication 17, caractérisée en ce que les tubes d'amenée des semences (41, 42) sont disposés l'un derrière l'autre, considéré dans le sens de la marche.

19. Combinaison d'appareils selon une des revendications 14 à 18, caractérisée en ce que les tubes d'amenée des semences (41, 42) qui débouchent dans le soc diffuseur (40) sont fixés à un châssis au-dessus des nappes de terre et peuvent s'écarter élastiquement de la position de base, vers l'arrière et/ou transversalement au sens de la marche.

20. Combinaison d'appareils selon une quelconque des revendications 14 à 19, caractérisée en ce que dans la position de base, les tubes d'amenée des semences (41, 42) sont inclinés sur la verticale d'un angle de 10 à 30°, de préférence d'un angle de 20°.

21. Combinaison d'appareils selon une des revendications 14 à 20, caractérisée en ce que les socs diffuseurs (40) sont inclinés sur l'horizontale d'environ 10° en pente descendante vers l'arrière, considéré par rapport au sens de la marche.

22. Combinaison d'appareils selon une des revendications 14 à 19, caractérisée en ce que les tubes d'amenée des semences (41, 42) sont aplatis latéralement, considéré par rapport au sens de la marche.

23. Combinaison d'appareils selon une des revendications 3 à 22, caractérisée en ce qu'un outil d'ameublissement (20), porté par l'attelage à trois points (11) du tracteur (10) est placé en avant des appareils portés par le châssis (50) des appareils.

24. Combinaison d'appareils selon la revendication 23, caractérisée en ce que l'outil d'ameublissement (20) est formé d'un cultivateur à socs à ailettes monopoutre.

25. Combinaison d'appareils selon la revendication 23 ou 24, caractérisée en ce que le châssis (50) des appareils est placé à la suite de l'outil d'ameublissement (20).

26. Combinaison d'appareils selon une ou plusieurs des revendications 3 à 25, caractérisée en ce que le châssis (50) des appareils est relié par deux bras de traction (21) fixés sur ce châssis, soit aux bras inférieurs de l'attelage à trois points (11) du tracteur (10), soit à l'outil d'ameublissement (20), de sorte que le châssis (50) des appareils peut osciller par rapport au tracteur (10) ou à l'outil d'ameublissement (20) autour d'un axe à peu près horizontal et disposé transversalement au sens de la marche (1).

**Claims**

1. Cultivating and sowing method in which the upper topsoil layer is removed by means of a rotating cutter provided with soil-removing tools and dispensed backwards as seen in the direction of travel as thrown soil and seed is widely deposited through the soil tracks by the seed guide tubes on the soil horizon produced by the cutter and is covered by the soil tracks, characterized in that the soil in front of the cutter is compacted by a presser roll, the soil tracks produced by the cutter are guided rearwards freely, i.e. without a bottom flap, the seed guide tubes open into duckfoot broadcasting coulters and the working depth of the cutter and of the coulters is determined by the presser roll running in front and a supporting arrangement running behind, this tool unit being pulled by a tractor.

2. Cultivating and sowing method according to Claim 1, characterized in that soil loosening to the depth of the topsoil is carried out in front of the presser roll.

3. Tool combination with a tractor, a rotatingly operating soil-cultivating machine, a presser roll and a tool frame supporting the soil-cultivating machine and the presser roll, characterized in that the presser roll (31) is arranged in front of the soil-cultivating machine (32) in the tool frame (50), the tool frame (50) is connected via at least one towing arm (21) to the tractor (10) and a supporting arrangement (51) arranged at the rear, which, together with the presser roll (31), controls the soil-cultivating machine (32) as regards the working depth, is connected to the tool frame (50).

4. Tool combination according to claim 3, characterized in that the presser roll (31) is arranged immediately in front of the soil-cultivating machine (32).

5. Tool combination according to either of Claims 3 or 4, characterized in that the presser roll (31) and the supporting arrangement (51) are arranged in vertically adjustable fashion on the tool frame (50).

6. Tool combination according to one of Claims 3 to 5, characterized in that the rear supporting arrangement (51) is formed by two supporting wheels (36) arranged behind the tool frame (50).

7. Tool combination according to Claim 6, characterized in that each supporting wheel (36) is arranged at the rear end of a supporting arm (34) connected behind the tool frame (50).

8. Tool combination according to Claim 7, characterized in that each supporting wheel (36) is freely rotatable about an approximately vertical axle (35) situated at the end of its supporting arm (34).

9. Tool combination according to Claim 7 or 8, characterized in that each supporting arm (34) is connected up to the tool frame around an approximately vertical axle (33).

10. Tool combination according to one of Claims 3 to 9, characterized in that the distance of the rear supporting arrangement (51) from the soil-cultivating machine (32) is chosen so that it bears no more than about 1/3 of the weight to be supported.

11. Tool combination according to one of Claims 3 to 10, characterized in that, for the transportation position, the tool frame (50) is raised by the tractor (10) and is carried in this position by the tractor (10) and the rear supporting arrangement (51).

12. Tool combination according to one of Claims 3 to 11, characterized in that the presser roll (31) is designed as a flexible, spiral presser roll.

13. Tool combination according to one of Claims 3 to 12, characterized in that the soil-cultivating machine (32) is formed in a manner known per se by a cutter.

14. Tool combination according to Claim 13, characterized in that it has seed feed devices (53), which are each provided with a broadcasting coulter (40) and seed feed tubes (41, 42), the presser roll (31) and the supporting arrangement (51) controlling the seed feed devices (53) as regards the working depth.

15. Tool combination according to one or more of Claims 3 to 14, characterized in that the cutter (32) does not have any bottom flaps guiding the soil tracks.

16. Tool combination according to one of Claims 3 to 15, characterized in that the supporting wheels (36) are arranged approximately to the side of the soil tracks produced by the cutter (32).

17. Tool combination according to one of Claims 14 to 16, characterized in that a plurality of seed feed tubes (41, 42) are united in one broadcasting coulter (40) and open onto a common impact surface (46) in the coulter (40).

18. Tool combination according to Claim 17, characterized in that the seed feed tubes (41, 42) are situated one behind the other as seen in the direction of travel.

19. Tool combination according to one of Claims 14 to 18, characterized in that the seed feed tubes (41, 42) opening into a broadcasting coulter (40) are secured on a frame above the soil tracks and can yield resiliently backwards and/or transversely to the direction of travel from the initial position.

20. Tool combination according to one of Claims 14 to 19, characterized in that, in the initial position, the seed feed tubes (41, 42) project rearwards at an angle of 10 to 30 degrees, preferably of 20 degrees, to the vertical.

21. Tool combination according to one of Claims 14 to 20, characterized in that, as seen in the direction of travel, the broadcasting coulters (40) are arranged with a downward slope towards the rear of about 10 degrees to the horizontal.

22. Tool combination according to one of Claims 14 to 19, characterized in that, as seen in the direction of travel, the seed feed tubes (41, 42) are flattened at the sides.

23. Tool combination according to one of Claims 3 to 22, characterized in that a loosening tool (20) supported by the three-point suspension (11) of the tractor (10) is placed in front of the working tools supported by the tool frame (50).

24. Tool combination according to Claim 23, characterized in that the loosening tool (20) is designed as a single-beam sweep cultivator.

25. Tool combination according to Claim 23 or 24, characterized in that the tool frame (50) is connected to the loosening tool (20).

26. Tool combination according to one or more of Claims 3 to 25, characterized in that the tool frame (50) is connected via two towing arms (21) attached to it to the lower connecting rods of the three-point suspension (11) of the tractor (10) or to the loosening tool (20), the tool frame (50) thus being able to swing relative to the tractor (10) or the loosening tool (20) about an approximately horizontal axis lying transversely to the direction of travel (1).

Fig. 1

Fig. 2

EP 0 268 163 B1

# Fig.5